# EUROPEAN PATENT SPECIFICATION

(11) **EP 3 631 042 B1**
(45) Date of publication and mention of the grant of the patent: **22.03.2023**
(21) Application number: 18725826.4
(22) Date of filing: 17.05.2018
(51) Int. Cl.: C23C 18/16, C23C 18/20, C08L 77/06

(54) **ARTICLE COMPRISING A POLYMER BODY AND A METAL PLATING**
GEGENSTAND MIT EINEM POLYMERKÖRPER UND EINER METALLPLATTIERUNG
ARTICLE COMPRENANT UN CORPS DE POLYMÈRE ET UN PLACAGE MÉTALLIQUE

(30) Priority: 25.05.2017 WO PCT/CN2017/085916
(43) Date of publication of application: 08.04.2020
(73) Proprietor: BASF SE, 67056 Ludwigshafen (DE)
(72) Inventor: WAGNER, Sebastian, 67056 Ludwigshafen (DE); KNIESEL, Simon, 67056 Ludwigshafen (DE); LU, Wen, Shanghai 200137 (CN); URBAN, Tobias, 67056 Ludwigshafen (DE); RICHTER, Frank, 67056 Ludwigshafen (DE)
(74) Representative: BASF IP Association
(86) International application number: PCT/EP2018/062964
(87) International publication number: WO 2018/215303

(56) References cited:
- EP-A2- 0 690 098
- JP-A- H 068 630
- JP-A- 2010 242 076
- US-A- 4 444 836

## Description

The present invention relates to an article comprising a polymer body and a metal plating. In this article, the metal plating is attached to the polymer body and the polymer body comprises as components at least one polyamide (A), at least one filler (B), at least one poly-N-vinyllactam polymer (C) and, optionally, at least one additive (D). The present invention also relates to the process for producing this article and to the use of this article e.g. as door handle in automotive applications. Further, the present invention relates to the use of the polymer body for producing metal-plated articles.

In the automotive, home appliance, electronic and many other industries, the demand for functional and/or decorative metal platings of thermoplastic polymer bodies is increasing. Typically these polymer bodies are electroplated with copper, nickel, chromium, and combinations thereof to provide a functional and/or decorative metallic surface. Electroplating usually requires a surface treatment of the thermoplastic polymer body to make it electrically conductive and to promote adhesion to it of electrodeposited metal. To promote adhesion the surface is usually roughened either by mechanical abrasion or chemical etching.

Metal-plated articles for functional and/or decorative uses are known per se. Processes for their manufacturing are, for example, described in US 5,324,766 and US 4,552,626. The polymer body of the metal-plated articles can comprise thermoset or thermoplastic polymers, wherein thermoplastic polymers such as polyamides are especially preferred for automotive and electrical applications.

Polyamides in general are semicrystalline polymers which are of particular importance industrially on account of their very good mechanical properties. In particular they possess high strength, stiffness, and toughness, good chemical resistance, and a high abrasion resistance and tracking resistance. These properties are particularly important for the production of injection moldings. High toughness is particularly important for the use of polyamides as packaging films. On account of their mechanical properties, polyamides are used industrially for producing textiles such as fishing lines, climbing ropes, and carpeting. Polyamides also find use for the production of wall plugs, screws, and cable ties. Polyamides, furthermore, are employed as paints, adhesives, and coating materials. To further improve their chemical resistance, stiffness and dimensional stability, polyamides are usually strengthened by mineral fillers.

However, surface defects, such as marbling, frequently appear on the surface of polymer bodies comprising mineral-filled polyamides. These surface defects are often in the form of light-colored or white streaks or smears and can even be visible on the surface of the metal-plated articles, resulting in a high rate of rejection. A further problem concerning the production of metal-plated articles is the unsatisfactory adhesion of the electroplated metal on the surface of the polymer body.

US 2006/0292385 A1 discloses a method for preparing metal-plated, mineral-filled polyamide resin compositions containing plasticizers, such as benzene and toluene sulfonamides. As further additive, the mineral-filled polyamide resin compositions can comprise dicarboxylic acids like dodecanedioic acid and adipic acid. The metal-plated articles of US 2006/0292385 A1 have fewer surface defects and an improved surface appearance.

Nevertheless, the plasticizers lead to a decreased stiffness and dimensional stability of the metal-plated articles. Further, the use of dicarboxylic acids results in the degradation of the polymer body.

EP 0 690 098 A2 discloses a blend comprising a polyphthalamide, a particulate filler, a minor amount of silicon oil and a rubber modifier for use in plating applications. The blend has an improved plate adhesion as well as an improved plating appearance, but requires at least two different additives, because the silicon oil or the rubber modifier alone are reported to be ineffective in promoting both improvements simultaneously. The object of the present invention was therefore to provide an article comprising a polymer body and a metal plating, which does not have the abovementioned disadvantages of the prior art or has them only to a significantly reduced extent.

This object is achieved by an article comprising a polymer body and a metal plating, wherein the metal plating is attached to the polymer body, and wherein the polymer body comprises as components
(A) at least one polyamide,
(B) at least one filler,
(C) at least one poly-N-vinyllactam polymer, and
(D) optionally at least one additive, wherein the article is produced by a process comprising the steps of
   i) providing a polymer body wherein the polymer body comprises the components (A) to (D)
   ii) etching at least one surface of the polymer body to be plated with at least one acid,
   iii) depositing a first metal layer comprising at least one plating catalyst on the at least one etched surface of step ii),
   iv) applying a second metal layer by electroless metal deposition, and
   v) applying at least one further metal layer by electrodeposition.

It has surprisingly been found that an article comprising a polymer body and a metal plating shows an improved surface quality if the polymer body comprises at least one polyamide, at least one filler and at least one poly-N-vinyllactam polymer. The article exhibits fewer surface defects, resulting in a very homogeneous and smooth surface of the article.

Moreover, it has also surprisingly been found that in this article, the adhesion between polymer body and metal is also improved.

Further, the presence of the at least one poly-N-vinyllactam polymer (C) does not lead to a degradation of the mechanical properties of the polymer body as well as of the resulting metal-plated article.

It shall be assumed that the above-mentioned advantages are achieved by the at least one poly-N-vinyllactam polymer. It shall be further assumed that the at least one poly-N-vinyllactam polymer improves the dispersion of the at least one filler in the polymer body, resulting in an improvement of the surface quality of the polymer body and of the metal-plated article. The aforementioned assumptions are not intended to limit the present invention.

The present invention will be described in more detail hereinafter.

### Polymer body

According to the invention, a polymer body is used comprising as components at least one polyamide (A), at least one filler (B), at least one poly-N-vinyllactam polymer (C) and, optionally, at least one additive (D).

The polymer body may have any of the forms known to the skilled person. It may be present, for example, in the form of powder, pellets, film, sheet or finished component. Preferably it takes the form of a sheet or a finished component.

"Film" in the context of the present invention refers to a planar polymer body having a thickness in the range from 20 µm to 500 µm, preferably in the range from 50 µm to 300 µm. "Sheet" refers to a planar polymer body having a thickness in the range from > 0.5 mm to 100 mm.

A powder for the purposes of the present invention means particles having a size in the range from 1 to 500 µm, preferably in the range from 20 to 150 µm, as determined by sieving, light scattering or microscopy.

Pellets for the purposes of the present specification are particles having a size in the range from > 0.5 to 10 mm, preferably in the range from 1 to 5 mm, determined by microscopy or a caliper gauge.

Finished components which may be used as polymer body are, for example, components for the construction sector, auto making, marine construction, rail vehicle construction, container construction, household appliances, for sanitary installations and/or for aerospace travel. Preferred finished components are, for example, dashboards, packaging films, and monofilaments, for fishing nets or fishing lines, for example.

### Component (A)

The polymer body comprises at least one polyamide as component (A). What is meant herein by "at least one polyamide" is precisely one polyamide and also mixtures of two or more polyamides.

The terms "component (A)", "at least one polyamide (A)", "polyamide (A)" and "polyamide" for the purpose of the present invention are synonymous and are used interchangeably throughout the present invention.

The polymer body preferably comprises at least 35% by weight, more preferably at least 45% by weight and especially preferably at least 50% by weight of component (A), based on the total weight of the polymer body.

Likewise, the polymer body preferably comprises not more than 85% by weight, more preferably not more than 75% by weight and especially preferably not more than 65% by weight of component (A), based on the total weight of the polymer body.

In a preferred embodiment, the polymer body comprises from 35 to 85% by weight, preferably from 45 to 75% by weight and especially from 50 to 65% by weight of component (A), based on the total weight of the polymer body. The percent by weight of the components (A), (B), (C) and (D) in the polymer body generally add up to 100%.

The at least one polyamide (A) preferably comprises at least one unit selected from the group consisting of -NH-(CH₂)ₓ-NH- units in which x is 4, 5, 6, 7 or 8, -CO-(CH₂)_{y}-NH-units in which y is 3, 4, 5, 6 or 7 and -CO-(CH₂)_{z}-CO- units in which z is 2, 3, 4, 5 or 6.

The at least one polyamide (A) more preferably comprises at least one unit selected from the group consisting of -NH-(CH₂)ₓ-NH- units in which x is 5, 6 or 7, -CO-(CH₂)_{y}-NH- units in which y is 4, 5 or 6, and -CO-(CH₂)_{z}-CO- units in which z is 3, 4 or 5.

The at least one polyamide (A) especially preferably comprises at least one unit selected from the group consisting of -NH-(CH₂)₆-NH- units, -CO-(CH₂)₅-NH- units and -CO-(CH₂)₄-CO- units.

If the at least one polyamide (A) comprises at least one unit selected from the group consisting of -CO-(CH₂)_{y}-NH- units, these units are usually derived from lactams having 5 to 9 ring members, preferably from lactams having 6 to 8 ring members and especially preferably from lactams having 7 ring members.

Lactams are generally known to the person skilled in the art. For the purpose of the present invention, lactams are understood to mean cyclic amides. Preferably, the lactams used to prepare the at least one polyamide (A) comprise 4 to 8 ring carbon atoms, more preferably 5 to 7 ring carbon atoms and especially preferably 6 ring carbon atoms.

Suitable lactams are, for example, selected from the group consisting of butyro-4-lactam (γ-lactam, γ-butyrolactam), 2-piperidone (δ-lactam, δ-valerolactam), hexano-6-lactam (ε-lactam, ε-caprolactam), heptano-7-lactam (ζ-lactam, ζ-heptanolactam) and octano-8-lactam (η-lactam, η-octanolactam).

The lactams are preferably selected from the group consisting of 2-piperidone (δ-lactam, δ-valerolactam), hexano-6-lactam (ε-lactam, ε-caprolactam) and heptano-7-lactam (ζ-lactam, ζ-heptanolactam).

If the at least one polyamide (A) comprises at least one unit selected from the group consisting of -NH-(CH₂)ₓ-NH- units, these units are usually derived from diamines. The at least one polyamide (A) is then preferably obtained via conversion of diamines, preferably via conversion of diamines with dicarboxylic acids.

Suitable diamines are generally known to the person skilled in the art and comprise 4 to 8 carbon atoms, preferably 5 to 7 carbon atoms and more preferably 6 carbon atoms.

Suitable amines are, for example, selected from the group consisting of 1,4-diaminobutane (butane-1,4-diamine, tetramethylene diamine, putrescine), 1,5-diaminopentane (pentamethylene diamine, pentane-1,5-diamine, cadaverine), 1,6-diaminohexane (hexamethylene diamine, hexane-1,6-diamine), 1,7-diaminoheptane and 1,8-diaminooctane. The diamines are preferably selected from the group consisting of 1,5-diaminopentane, 1,6-diaminohexane and 1,7-diaminoheptane. 1,6-diaminohexane is especially preferred.

Furthermore, the at least one polyamide (A) may comprise units derived from m-xylylene diamine, di-(4-aminophenyl)methane, di-(4-aminocyclohexyl)methane, 2,2-di-(4-aminophenyl)propane, 2,2-di-(4-aminocyclohexyl)propane and/or 1,5-diamino-2-methylpentane.

If the at least one polyamide comprises at least one unit selected from the group consisting of -CO-(CH₂)_{z}-CO- units, these units are usually derived from dicarboxylic acids. The at least one polyamide (A) is then preferably obtained via conversion of dicarboxylic acids, preferably via conversion of dicarboxylic acids with diamines.

Suitable dicarboxylic acids are generally known to the person skilled in the art and comprise 4 to 8 carbon atoms, preferably 5 to 7 carbon atoms and more preferably 6 carbon atoms.

Suitable dicarboxylic acids are, for example, selected from the group consisting of butanedioic acid (succinic acid), pentanedioic acid (glutaric acid), hexanedioic acid (adipic acid), heptanedioic acid (pimelic acid) and octanedioic acid (suberic acid). The dicarboxylic acids are preferably selected from the group consisting of pentanedioic acid, hexanedioic acid and heptanedioic acid. Hexanedioic acid is especially preferred.

The at least one polyamide (A) may additionally comprise further units, for example, units derived from lactams having 10 to 13 ring members, such as capryllactam and/or lauryllactam.

Moreover, the at least one polyamide (A) may comprise units derived from aliphatic dicarboxylic acids having 9 to 36 carbon atoms, preferably 9 to 12 carbon atoms and more preferably 9 to 10 carbon atoms. In addition, aromatic dicarboxylic acids are also suitable.

Examples for such dicarboxylic acids are nonanedioic acid (azelaic acid), decanedioic acid (sebacid acid), dodecanedioic acid, isophthalic acid and/or terephthalic acid.

The following non-exhaustive listing comprises the abovementioned polyamides and also further polyamides suitable as component (A) for the purposes of the invention (the monomers are indicated in parentheses):
- PA 4: (pyrrolidone)
- PA 6: (ε-caprolactam)
- PA 7: (ethanolactam)
- PA 8: (capryllactam)
- PA 9: (9-aminononanoic acid)
- PA 11: (11-aminoundecanoic acid)
- PA 12: (laurolactam)
- PA 46: (tetramethylenediamine, adipic acid)
- PA 66: (hexamethylenediamine, adipic acid)
- PA 69: (hexamethylenediamine, azelaic acid)
- PA 610: (hexamethylenediamine, sebacic acid)
- PA 612: (hexamethylenediamine, decanedicarboxylic acid)
- PA 613: (hexamethylenediamine, undecanedicarboxylic acid)
- PA 1212: (1,12-dodecanediamine, decanedicarboxylic acid)
- PA 1313: (1,13-diaminotridecane, undecanedicarboxylic acid)
- PA 6T: (hexamethylenediamine, terephthalic acid)
- PA 9T: (nonyldiamine, terephthalic acid)
- PA MXD6: (m-Xylylenediamine, adipic acid)
- PA 6I: (hexamethylenediamine, isophthalic acid)
- PA 6-3-T: (trimethylhexamethylenediamine, terephthalic acid)
- PA 6/6T: (see PA 6 and PA 6T)
- PA 6/66: (see PA 6 and PA 66)
- PA 6/12: (see PA 6 and PA 12)
- PA 66/6/610: (see PA 66, PA 6 and PA 610)
- PA 6I/6T: (see PA 6I and PA 6T)
- PA PACM 12: (diaminodicyclohexylmethane, laurolactam)
- PA 6I/6T/PACM: (see PA 6I/6T and diaminodicyclohexylmethane)
- PA 12/MACMI: (laurolactam, dimethyildiaminodicyclohexylmethane, isophthalic acid)
- PA 12/MACMT: (laurolactam, dimethyldiaminodicyclohexylmethane, terephthalic acid)
- PA PDA-T: (phenylenediamine, terephthalic acid)

The present invention accordingly also provides an article where the at least one polyamide (A) is selected from the group consisting of polyamide 4, polyamide 6, polyamide 7, polyamide 8, polyamide 9, polyamide 11, polyamide 12, polyamide 46, polyamide 66, polyamide 69, polyamide 610, polyamide 612, polyamide 613, polyamide 1212, polyamide 1313, polyamide 6T, polyamide 9T, polyamide MXD6, polyamide 6I, polyamide 6-3-T, polyamide 6/6T, polyamide 6/66, polyamide 6/12, polyamide 66/6/610, polyamide 6I/6T, polyamide PACM 12, polyamide 6I/6T/PACM, polyamide 12/MACMI, polyamide 12/MACMT and polyamide PDA-T.

These polyamides and their preparation are known. A person skilled in the art can find details regarding their preparation in "Ullmanns Enzyklopädie der Technischen Chemie", 4th edition, vol. 19, pp. 39-54, Verlag Chemie, Weinheim 1980, "Ullmanns Encyclopedia of Industrial Chemistry", Vol. A21, pp. 179-206, VCH Verlag, Weinheim 1992, and also Stoeckhert, Kunststofflexikon, pp. 425-428, Hanser Verlag, Munich 1992 (keyword "Polyamide" and the following).

Preferably, the at least one polyamide (A) is selected from the group consisting of polyamide 6, polyamide 46, polyamide 66, polyamide 610, polyamide 6/12, polyamide 6/66, polyamide 6T, polyamide 9T, polyamide 6I, polyamide 6/6T and polyamide 6I/6T.

Component (A) preferably comprises at least 50% by weight of at least one polyamide selected from the group consisting of polyamide 6, polyamide 66, polyamide 6/66, polyamide 6T, polyamide 9T and polyamide 6/6T, based on the total weight of component (A).

In a preferred embodiment, component (A) comprises at least 80% by weight, more preferably at least 90% by weight and especially preferably at least 98% by weight of at least one polyamide selected from the group consisting of polyamide 6, polyamide 66, polyamide 6/66, polyamide 6T, polyamide 9T and polyamide 6/6T, based on the total weight of component (A).

In a further particularly preferred embodiment, component (A) consists essentially of at least one polyamide selected from the group consisting of polyamide 6, polyamide 66, polyamide 6/66, polyamide 6T, polyamide 9T and polyamide 6/6T.

The term "consists essentially of" for the purpose of the present invention is understood to mean that component (A) comprises more than 99% by weight, preferably at least 99.5% by weight and more preferably at least 99.9% by weight of at least one polyamide selected from the group consisting of polyamide 6, polyamide 66, polyamide 6/66, polyamide 6T, polyamide 9T and polyamide 6/6T.

In a further particularly preferred embodiment, component (A) consists of at least one polyamide selected from the group consisting of polyamide 6, polyamide 66, polyamide 6/66, polyamide 6T, polyamide 9T and polyamide 6/6T.

The at least one polyamide (A) generally has a viscosity number in the range of 30 to 350 ml/g, preferably in the range of 90 to 240 ml/g, and especially preferably in the range from 100 to 130 ml/g. The viscosity number is determined in a solution of 0.5% by weight of the at least one polyamide (A) in 100 ml of 96% strength by weight sulfuric acid at 25°C in accordance with ISO 307.

The weight-average molecular weight (M_{w}) of the at least one polyamide (A) is customarily in the range from 500 to 2 000 000 g/mol, preferably in the range from 5000 to 500 000 g/mol, and especially preferably in the range from 10 000 to 100 000 g/mol. The weight-average molecular weight (M_{w}) is determined according to ASTM D4001.

The melting temperature T_{M} of the at least one polyamide (A) is customarily in the range from 80 to 330°C, preferably in the range from 150 to 250°C, and especially preferably in the range from 180 to 230°C, determined by differential scanning calorimetry (DSC) or by dynamic mechanical thermoanalysis (DMTA) for semicrystalline polyamides. For amorphous polyamides, T_{M} is defined as the temperature at which the at least one polyamide (A) (having a minimum solution viscosity of 80 mL/g to ISO 307 in sulfuric acid) has at least a zero shear viscosity of 5000 Pa s and hence is processable in the melt (measured on a DHR-1 rotational rheometer from TA Instruments, plate/plate geometry, plate diameter 25 mm and sample height 1.0 mm. Deformation 1.0%, preheat time 1.5 min, and material dried under reduced pressure at 80°C for 7 days beforehand).

The at least one polyamide usually has a glass transition temperature (T_{g}). The glass transition temperature (T_{g}) of the at least one polyamide (A) is usually in the range from 0 to 160°C and preferably in the range from 40 to 105°C.

The glass transition temperature (T_{g}) is determined via differential scanning calorimetry (DSC). The measurement of the glass transition temperature (T_{g}) is carried out under nitrogen atmosphere in heat/cool/heat cycles of 20°C/min, 20°C/min and 20°C/min, respectively. For the measurement, approximately 0.006 to 0.010 g of the substance were sealed in an aluminum crucible. In the first heating run, the samples are heated to 340°C, then rapidly cooled to 0°C and then in the second heating run, heated to 340°C. The respective T_{g} value is determined from the second heating run. This procedure to determine the glass transition temperature (T_{g}) is known to the person skilled in the art.

### Component (B)

The polymer body comprises at least one filler as component (B). What is meant herein by "at least one filler" is precisely one filler and also mixtures of two or more fillers.

The terms "component (B)", "at least one filler (B)", "filler (B)" and "filler" for the purpose of the present invention are synonymous and are used interchangeably throughout the present invention.

The polymer body preferably comprises at least 14.9% by weight, more preferably at least 24.5% by weight and especially preferably at least 34% by weight of component (B), based on the total weight of the polymer body.

Likewise, the polymer body preferably comprises not more than 55% by weight, more preferably not more than 51% by weight and especially preferably not more than 47% by weight of component (B), based on the total weight of the polymer body.

In a preferred embodiment, the polymer body comprises from 14.9 to 55% by weight, preferably from 24.5 to 51% by weight and especially from 34 to 47% by weight of component (B), based on the total weight of the polymer body. The percent by weight of components (A), (B), (C) and (D) in the polymer body generally adds up to 100%.

Preferably, component (B) is selected from the group consisting of alkaline earth metal carbonate, alkaline earth metal oxide, alkaline earth metal silicate, metallic fibre, asbestos, ceramic fibre, glass fibre, carbon fibre, aramid fibre, titanium dioxide, aluminum oxide, mica, talc, barium sulfate, plaster, zirconium oxide, antimony oxide, clay, silica, silica-alumina, alumina, sericite, kaolin, diatomite, magnesium carbonate, feldspar, silica stone, carbon black, glass bead, Shirasu balloon, red oxide, zinc oxide, wollastonite and Syloid.

The present invention accordingly also provides an article where the at least one filler (B) is selected from the group consisting of alkaline earth metal carbonate, alkaline earth metal oxide, alkaline earth metal silicate, metallic fibre, asbestos, ceramic fibre, glass fibre, carbon fibre, aramid fibre, titanium dioxide, aluminum oxide, mica, talc, barium sulfate, plaster, zirconium oxide, antimony oxide, clay, silica, silica-alumina, alumina, sericite, kaolin, diatomite, magnesium carbonate, feldspar, silica stone, carbon black, glass bead, Shirasu balloon, red oxide, zinc oxide, wollastonite and Syloid.

Examples for suitable alkaline earth metal carbonates are magnesium carbonate, calcium carbonate and barium carbonate.

Examples for suitable alkaline earth metal oxides are magnesium oxide, calcium oxide and barium oxide.

Suitable alkaline earth metal silicates are calcium silicate and magnesium silicate.

The at least one filler can be in the form of fibres, granulates, needles, flakes, plates or in particulate form.

Preferred fibrous fillers are ceramic fibers, glass fibers, carbon fibers and aramid fibers, particular preference being given to glass fibers. These can be used as rovings or in the commercially available forms of chopped glass.

To improve the compatibility between the at least one polyamide and the fibrous filler, the surface of the fibrous filler can be treated with a silane compound.

Suitable silanes are those according to the general formula (II)

(X-(CH₂)₉)ₖ-Si-(O-CₕH₂ₕ₊₁)₄₋ₖ (II)

where
- g: is 2 to 10, preferably 3 to 4;
- h: is 1 to 5, preferably 1 to 2;
- k: is 1 to 3, preferably 1; and
- X: is an amino group, a glycidyl group or a hydroxy group.

Preferably, the silane compound is selected from the group consisting of aminopropyltrimethoxysilane, aminobutyltrimethoxysilane, aminopropyltriethoxysilane, aminobutyltriethoxysilane and also the corresponding silane compounds which contain a glycidyl group as substituent X.

Preferably, the fibrous filler comprises the silane compound in an amount of from 0.01 to 2% by weight, preferably of from 0.025 to 1% by weight and especially of from 0.05 to 0.5% by weight, based on the total weight of the fibrous filler.

The at least one filler (B) can also be in the form of needles. Such fillers are also referred to as acicular mineral fillers.

For the purposes of the invention, acicular mineral fillers are mineral fillers with strongly developed acicular character, i.e. mineral fillers which are present in the form of slender, needle-like crystals. An example is acicular wollastonite. The acicular mineral filler preferably has an L/D (length to diameter) ratio of from 8:1 to 35:1, preferably from 8:1 to 11:1. The mineral filler may optionally have been pretreated with the abovementioned silane compounds, but the pretreatment is not essential.

The at least one filler (B) can also be present in particulate form.

In this case, the at least one filler (B) preferably has an average particle size of 0.1 to 50 µm, preferably of 0.1 to 30 µm, and especially of 0.5 to 10 µm.

The present invention accordingly also provides an article where the at least one filler (B) is in particulate form and has an average particle size of 0.1 to 50 µm.

The average particle size of the at least one filler (B) is measured by laser defraction, using a malvern mastersizer 2000 particle size analyzer. The analysis is carried out by means of Fraunhofer defraction. For the measurement, the at least one filler (B) is dispersed in deionized water under stirring and ultrasonic treatment for ten minutes.

Component (B) preferably comprises at least 50% by weight of at least one filler selected from the group consisting of kaolin and wollastonite, based on the total weight of component (B).

In a preferred embodiment, component (B) comprises at least 80% by weight, more preferably at least 90% by weight and especially preferably at least 98% by weight of at least one filler selected from the group consisting of kaolin and wollastonite, based on the total weight of component (B).

In a further particularly preferred embodiment, component (B) consists essentially of at least one filler selected from the group consisting of kaolin and wollastonite. The term "consists essentially of" for the purpose of the present invention is understood to mean that component (B) comprises more than 99% by weight, preferably at least 99.5% by weight and more preferably at least 99.9% by weight of at least one filler selected from the group consisting of kaolin and wollastonite.

In a further particularly preferred embodiment, component (B) consists of at least one filler selected from the group consisting of kaolin and wollastonite.

### Component (C)

The polymer body comprises at least one poly-N-vinyllactam polymer. What is meant herein by "at least one poly-N-vinyllactam polymer" is precisely one poly-N-vinyllactam polymer and also mixtures of two or more poly-N-vinyllactam polymers.

The terms "component (C)", "at least one poly-N-vinyllactam polymer (C)", "poly-N-vinyllactam polymer (C)" and "poly-N-vinyllactam polymer" for the purpose of the present invention are synonymous and are used interchangeably throughout the present invention.

The polymer body preferably comprises at least 0.1% by weight, more preferably at least 0.5% by weight and especially preferably at least 1% by weight of component (C), based on the total weight of the polymer body.

Likewise, the polymer body preferably comprises not more than 10% by weight, more preferably not more than 4% by weight and especially preferably not more than 3% by weight of component (C), based on the total weight of the polymer body.

In a preferred embodiment, the polymer body comprises from 0.1 to 10% by weight, preferably from 0.5 to 4% by weight and especially from 1 to 3% by weight of component (C), based on the total weight of the polymer body. The percent by weight of components (A), (B), (C) and (D) in the polymer body generally adds up to 100%.

Suitable poly-N-vinyllactams are generally known to the person skilled in the art.

According to the invention, the at least one poly-N-vinyllactam (C) comprises polymerized units of the formula (I) 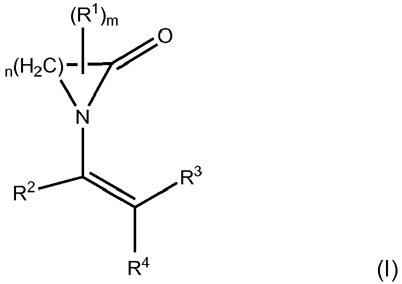 where
- n: is 3 to 12;
- m: is 0 to 3;
- R¹: is C₁-C₁₀-alkyl, C₂-C₁₀-alkenyl, aryl or aralkyl;
- R², R³ and R⁴: are each, independently of one another, hydrogen, C₁-C₁₀-alkyl, C₂-C₁₀-alkenyl, aryl or aralkyl.

The present invention accordingly also provides an article where the at least one poly-N-vinyllactam polymer (C) comprises polymerized units of the formula (I) 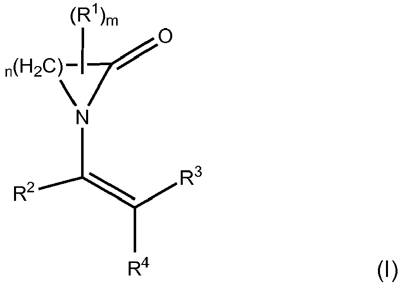 where
- n: is 3 to 12;
- m: is 0 to 3;
- R¹: is C₁-C₁₀-alkyl, C₂-C₁₀-alkenyl, aryl or aralkyl;
- R², R³ and R⁴: are each, independently of one another, hydrogen, C₁-C₁₀-alkyl, C₂-C₁₀-alkenyl, aryl or aralkyl.

Within the context of the present invention, definitions such as C₁-C₁₀-alkyl, as defined above for the radicals R¹, R², R³ and R⁴ in formula (I), mean that this substituent (radical) is an alkyl radical with a carbon atom number from 1 to 10. The alkyl radical may be linear or branched and also optionally cyclic. Alkyl radicals which have both a cyclic component and also a linear component likewise fall under this definition.

The alkyl radicals can optionally also be mono- or polysubstituted with functional groups such as amino, amido, ether, vinyl ether, isoprenyl, hydroxy, mercapto, carboxyl, halogen, aryl or heteroaryl. Unless stated otherwise, the alkyl radicals preferably have no functional groups as substituents. Examples of alkyl radicals are methyl, ethyl, n-propyl, sec-propyl, n-butyl, sec-butyl, isobutyl, 2-ethylhexyl, tertiarybutyl (tert-bu/t-Bu), pentyl, hexyl, heptyl, cyclohexyl, octyl, nonyl, decyl, undecyl, dodecyl, tridecyl, tetradecyl, pentadecyl, hexadecyl, heptadecyl, octadecyl, nonadecyl or eicosanyl.

Within the context of the present invention, definitions such as C₂-C₁₀-alkenyl, as defined above for the radicals R¹, R², R³ and R⁴ in formula (I), mean that this substituent (radical) is an alkenyl radical with a carbon atom number from 2 to 10. This carbon radical is preferably monounsaturated, but it can optionally also be di- or polyunsaturated. As regards linearity, branches, cyclic fractions and optionally present substituents, the analogous details as defined above with reference to the C₁-C₁₀-alkyl radicals are applicable. Preferably, within the context of the present invention, C₂-C₁₀-alkenyl is vinyl, 1-allyl, 3-allyl, 2-allyl, cis- or trans-2-butenyl or ω-butenyl.

Within the context of the present invention, the term "aryl", as defined above for the radicals R¹, R², R³ and R⁴ in formula (I), means that the substituent (radical) is an aromatic. The aromatic may be a monocyclic, bicyclic or optionally polycyclic aromatic. In the case of polycyclic aromatics, individual cycles can optionally be completely or partially saturated. Preferred examples of aryl are phenyl, naphthyl or anthracyl, in particular phenyl. The aryl radical can also optionally be mono- or polysubstituted with functional groups, as defined above for C₁-C₁₀-alkyl.

Within the context of the present invention, the term "aralkyl", as defined above for the radicals R¹, R², R³ and R⁴ in formula (I), means that an alkyl radical (alkylene) is in turn substituted with an aryl radical. The alkyl radical may be for example a C₁-C₁₀-alkyl radical as per the above definitions.

In the above formula (I), the radical R¹ may be present once (m=1) or multiple times (m=2 or 3). The radical R¹ here can replace one or more hydrogen atoms on any desired carbon atoms of the cyclic lactam - corresponding to its frequency. If two or more radicals R¹ are present, these can be attached to the same carbon atom or to different carbon atoms. For m=0, the corresponding cyclic lactam is unsubstituted.

The at least one poly-N-vinyllactam polymer (C) preferably comprises polymerized units of the formula (I) where n is 3 to 5.

The at least one poly-N-vinyllactam polymer (C) further preferably comprises polymerized units of the formula (I) where m is 0.

The at least one poly-N-vinyllactam polymer (C) preferably comprises polymerized units of the formula (I) where R², R³ and R⁴ are each hydrogen.

The at least one poly-N-vinyllactam polymer (C) preferably comprises polymerized units of N-vinyllactams selected from the group consisting of N-vinylpyrrolidone (N-vinyl-2-pyrrolidone), N-vinylpiperidone (N-vinyl-2-piperidone) and N-vinylcaprolactam.

The present invention accordingly also provides an article where the at least one poly-N-vinyllactam polymer (C) comprises polymerized units of N-vinyllactams selected from the group consisting of N-vinylpyrrolidone (N-vinyl-2-pyrrolidone), N-vinylpiperidone (N-vinyl-2-piperidone) and N-vinylcaprolactam.

Component (C) preferably comprises at least 50% by weight of polymerized units of N-vinyllactams selected from the group consisting of N-vinylpyrrolidone, N-vinylpiperidone and N-vinylcaprolactam, based on the total weight of component (C).

In a preferred embodiment, component (C) comprises at least 80% by weight, more preferably at least 90% by weight and especially preferably at least 98% by weight of polymerized units of N-vinyllactams selected from the group consisting of N-vinylpyrrolidone, N-vinylpiperidone and N-vinylcaprolactam, based on the total weight of component (C).

In a further particularly preferred embodiment, component (C) consists essentially of polymerized units of N-vinyllactams selected from the group consisting of N-vinylpyrrolidone, N-vinylpiperidone and N-vinylcaprolactam. The term "consists essentially of" for the purpose of the present invention is understood to mean that component (C) comprises more than 99% by weight, preferably at least 99.5% by weight and more preferably at least 99.9% by weight of polymerized units of N-vinyllactams selected from the group consisting of N-vinylpyrrolidone, N-vinylpiperidone and N-vinylcaprolactam.

In a further particularly preferred embodiment, component (C) consists of polymerized units of N-vinyllactams selected from the group consisting of N-vinylpyrrolidone, N-vinylpiperidone and N-vinylcaprolactam

In another preferred embodiment, component (C) comprises copolymerized units of N-vinyllactams selected from the group consisting of N-vinylpyrrolidone, N-vinylpiperidone and N-vinylcaprolactam with 1-vinylimidazole or vinyl acetate. In this embodiment, copolymerized units of N-vinylpyrrolidone with 1-vinylimidazole or vinyl acetate are especially preferred.

The present invention accordingly also provides an article where the at least one poly-N-vinyllactam polymer (C) comprises copolymerized units of N-vinyllactams selected from the group consisting of N-vinylpyrrolidone, N-vinylpiperidone and N-vinylcaprolactam with 1-vinylimidazole or vinyl acetate.

In another further preferred embodiment, component (C) preferably comprises at least 50% by weight of copolymerized units of N-vinylpyrrolidone with 1-vinylimidazole or vinyl acetate, based on the total weight of component (C).

In another more preferred embodiment, component (C) comprises at least 80% by weight, more preferably at least 90% by weight and especially preferably at least 98% by weight of copolymerized units of N-vinylpyrrolidone with 1-vinylimidazole or vinyl acetate, based on the total weight of component (C).

In another particularly preferred embodiment, component (C) consists essentially of copolymerized units of N-vinylpyrrolidone with 1-vinylimidazole or vinyl acetate. The term "consists essentially of" for the purpose of the present invention is understood to mean that component (C) comprises more than 99% by weight, preferably at least 99.5% by weight and more preferably at least 99.9% by weight of copolymerized units of N-vinylpyrrolidone with 1-vinylimidazole or vinyl acetate.

In another most preferred embodiment, component (C) consists of copolymerized units of N-vinylpyrrolidone with 1-vinylimidazole or vinyl acetate.

The weight-average molecular weight (M_{w}) of the at least one poly-N-vinyllactam polymer (C) is generally in the range from 2,500 to 250,000 g/mol, preferably in the range from 10,000 to 150,000 and more preferably in the range from 70,000 to 110,000 g/mol. The weight average molecular weight (M_{w}) is measured using gel permeation chromatography (GPC). Dimethylacetamide (DMAc) was used as solvent and narrowly distributed polymethyl methacrylate was used as standard in the measurement.

The present invention accordingly also provides an article where the at least one poly-N-vinyllactam polymer (C) has a weight average molecular weight M_{w} of 2,500 to 250,000 g/mol.

### Component (D)

The polymer body optionally comprises at least one additive as component (D). What is meant herein by "at least one additive" is precisely one additive and also mixtures of two or more additives.

The terms "component (D)", "at least one additive (D)", "additive (D)" and "additive" for the purpose of the present invention are synonymous and are used interchangeably throughout the present invention.

Preferably, the polymer body comprises from 0 to 8% by weight, more preferably from 0 to 5% by weight, especially preferably 0 to 2.5% by weight, of component (D), based on the total weight of the polymer body. The percent by weight of components (A), (B), (C) and (D) in the polymer body generally add up to 100%.

If the polymer body comprises component (D), the polymer body preferably comprises at least 0.1% by weight and more preferably at least 0.5% by weight of component (D), based on the total weight of the polymer body.

In a preferred embodiment, the polymer body comprises from 0.1 to 5% by weight, and more preferably from 0.5 to 2.5% by weight of component (D), based on the total weight of the polymer body. The percent by weight of the components (A), (B), (C) and (D) in the polymer body generally add up to 100%.

Preferably, component (D) is selected from the group consisting of lubricants, antioxidants, colorants, color stabilizers, antistatic agents, flame retardants, agents for increasing resistance to ultraviolet light, stabilizers for improving heat resistance, mold release agents, nucleating agents and plasticizers. The component (D) particularly preferably comprises a lubricant.

The present invention accordingly also provides an article where the at least one additive is selected from the group consisting of lubricants, antioxidants, colorants, color stabilizers, antistatic agents, flame retardants, agents for increasing resistance to ultraviolet light, stabilizers for improving heat resistance, mold release agents, nucleating agents and plasticizers.

Suitable lubricants and mold release agents include, but are not limited to, stearic acids, stearyl alcohol, stearic esters, ethylene bis(stearamide) (EBS) and generally higher fatty acids, their derivatives, and corresponding fatty acid mixtures having from 12 to 30 carbon atoms, silicone oils, oligomeric isobutylene, or similar substances.

Suitable antioxidants, color stabilizers and agents for increasing resistance to ultraviolet light include, but are not limited to, sterically hindered phenols, secondary aromatic amines, hydroquinones, resorcinols, vitamin E or analogous-structure compounds, copper(I) halides, hindered amine light stabilizers ("HALS"), quenchers, such as nickel quenchers, hydroperoxide decomposers, triazines, benzoxazinones, benzotriazoles, benzophenones, benzoates, formamidines, cinnamates/propenoates, aromatic propanediones, benzimidazoles, cycloaliphatic ketones, formanilides (including oxamides), cyanoacrylates, benzopyranones and salicylates.

Suitable colorants include, but are not limited to, organic dyes, such as nigrosin, or pigments, such as ultramarine blue, phthalocyanines, titanium dioxide, cadmium sulfides, cadmium selenide, carbon black and derivatives of perylenetetracarboxylic acid.

Suitable flame retardants include, but are not limited to, usually red phosphorus, ammonium polyphosphate, tris(2-chloroethyl) phosphate, tris(2-chloropropyl) phosphate, tetrakis(2-chloroethyl)ethylene diphosphate, dimethyl methane phosphonate, diethyl diethanolaminomethylphosphonate, aluminium diethylphosphinate or derivatives thereof (Exolit^{®}), aluminium hypophosphite and combinations thereof.

Suitable stabilizers for improving heat resistance include, but are not limited to, metal halides (chlorides, bromides, iodides) derived from metals of group I of the Periodic Table of the Elements (e.g. Li, Na, K).

Suitable nucleating agents include, but are not limited to, sodium phenylphosphinate, alumina, silica, nylon-2,2, and also preferably talc.

Suitable plasticizers include, but are not limited to, dioctyl phthalate, dibenzyl phthalate, butyl benzyl phthalate, hydrocarbon oils, N-(n-butyl)-benzenesulfonamide and orthoand para-tolylethylsulfonamide

The polymer body may be prepared by any methods known to the skilled person. Examples of suitable methods include injection molding, extrusion, calendering, rotomolding, and blow molding; preferred methods are injection molding and/or extrusion.

If the polymer body is prepared via injection molding and/or extrusion, the components (A), (B), (C) and optionally (D) are preferably compounded in an extruder to obtain a polymer body.

The at least one additive (D) may be metered in at any stage of the production process of the polymer body, but preferably at an early juncture, in order that the stabilizing effects (or other specific effects) of the at least one additive (D) may be utilized at an early stage.

The temperature of the extruder during the compounding of the components (A), (B), (C) and optionally (D) can be any temperature and is usually in the range from 200 to 350°C, preferably in the range from 220 to 330°C and particularly preferably in the range from 260 to 310°C.

The jacket temperature of the extruder can be higher than the temperature of the components in the extruder, and it is equally possible that the jacket temperature of the extruder is lower than the temperature of the components in the extruder. By way of example, it is possible that the jacket temperature of the extruder is initially higher than the temperature of the components in the extruder when the components are being heated. When the components in the extruder are being cooled, it is possible that the jacket temperature of the extruder is lower than the temperature of the components in the extruder.

The temperatures given in the present invention and referring to the extruder are meant to be jacket temperatures of the extruder. "Jacket temperature of the extruder" means the temperature of the jacket of the extruder. The jacket temperature of the extruder is therefore the temperature of the external wall of the extruder barrel.

As extruder, any extruder known to the skilled person is suitable which can be used at the temperatures and pressures during the compounding. In general, the extruder can be heated to at least the temperature, at which the at least one polyamide (A), the at least one filler (B), the at least one poly-N-vinyllactam polymer (C) and, optionally, the at least one additive (D) are compounded.

The extruder may be a single-, twin or multiple-screw extruder. Twin-screw extruders are preferred. Twin-screw extruders are also known as double screw extruders. The twin-screw extruders may be corotating or counterrotating.

Single-screw extruders, twin-screw extruders and multiple-screw extruders are known to the skilled person and are for example described in C. Rauwendaal: Polymer extrusion, Carl Hanser Verlag GmbH & Co. KG, 5th edition (16 January 2014*).*

The extruder may also comprise further devices, for example mixing elements or kneading elements.

Mixing elements serve for the mixing of the individual components comprised in the extruder. Suitable mixing elements are known to the skilled person and are, by way of example, static mixing elements or dynamic mixing elements.

Kneading elements likewise serve for the mixing of the individual components comprised in the extruder. Suitable kneading elements are known to the person skilled in the art and are, by way of example, kneading screws or kneading blocks, for example disk kneading blocks or shoulder kneading blocks.

The components (A), (B), (C) and optionally (D) can be added to the extruder in succession or concurrently and are mixed and compounded in the extruder to obtain the polymer body.

The components (A), (B), (C) and optionally (D) can be compounded in any ratio. Preferably, the components (A), (B), (C) and optionally (D) are compounded in such a ratio that the resulting polymer body comprises
from 35 to 85% by weight of the at least one polyamide (A),
from 14.9 to 55% by weight the at least one filler (B),
from 0.1 to 10% by weight of the at least one poly-N-vinyllactam polymer (C), and
from 0 to 8% by weight of the at least one additive (D),
based on the total weight of the polymer body.

The present invention accordingly also provides an article where the polymer body comprises
from 35 to 85 % by weight of the at least one polyamide (A),
from 14.9 to 55 % by weight of the at least one filler (B),
from 0.1 to 10 % by weight of the at least one poly N vinyllactam polymer (C) and,
from 0 to 8 % by weight of the at least one additive (D),
based on the total weight of the polymer body.

Particularly preferred, the components (A), (B), (C) and optionally (D) are compounded in such a ratio that the resulting polymer body comprises
from 45 to 75% by weight of the at least one polyamide (A),
from 24.5 to 51% by weight the at least one filler (B),
from 0.5 to 4% by weight of the at least one poly-N-vinyllactam polymer (C) and,
from 0 to 5% by weight of the at least one additive (D),
based on the total weight of the polymer body.

More preferred, the components (A), (B), (C) and optionally (D) are compounded in such a ratio that the resulting polymer body comprises
from 50 to 65% by weight of the at least one polyamide (A),
from 34 to 47% by weight the at least one filler (B),
from 1 to 3% by weight of the at least one poly-N-vinyllactam polymer (C), and
from 0 to 5% by weight of the at least one additive (D),
based on the total weight of the polymer body.

The percent by weight of the at least one polyamide (A), the at least one filler (B), the at least one poly-N-vinyllactam polymer (C) and, optionally, the at least one additive (D) generally add up to 100% by weight.

The polymer body can then be obtained from the extruder by any method known to the skilled person and in any desired form.

The polymer body comprising the components (A), (B), (C) and optionally (D) is used for producing metal-plated articles.

The present invention accordingly also provides the use of a polymer body comprising as components
(A) at least one polyamide,
(B) at least one filler,
(C) at least one poly-N-vinyllactam polymer and
(D) optionally at least one additive
for producing metal plated articles.

### Metal plating

According to the invention, the article comprises a polymer body and a metal plating, wherein the metal plating is attached to the polymer body.

The metal plating can be a layer of a single metal or an alloy of two or more different metals. The metal plating can also comprise two or more layers of the same or different metals and/or metal alloys.

In general, any metal is suitable as material for the metal plating attached to the polymer body.

Suitable metals, for example include, but are not limited to titanium, zirconium, chromium, iron, ruthenium, cobalt, rhodium, iridium, nickel, palladium, platinum, copper, silver, gold, zinc, tin or lead.

Preferably, the metal plating comprises at least one metal selected from the group consisting of copper, nickel, cobalt, palladium, chromium and tin.

The present invention accordingly also provides an article where the metal plating comprises at least one metal selected from the group consisting of copper, nickel, cobalt, palladium, chromium and tin.

The metal plating comprises at least one metal. What is meant herein by "at least one metal" is precisely one metal and also mixtures of two or more metals.

Preferably, the metal plating comprises at least 50% by weight, based on the total weight of the metal plating, of at least one metal selected from the group consisting of copper, nickel, cobalt, palladium, chromium and tin.

In another more preferred embodiment, the metal plating comprises at least 80% by weight, more preferably at least 90% by weight and especially preferably at least 98% by weight of at least one metal selected from the group consisting of copper, nickel, cobalt, palladium, chromium and tin, based on the total weight of the metal plating.

In another particularly preferred embodiment, the metal plating consists essentially of at least one metal selected from the group consisting of copper, nickel, cobalt, palladium, chromium and tin. The term "consists essentially of" for the purpose of the present invention is understood to mean that the metal plating comprises more than 99% by weight, preferably at least 99.5% by weight and more preferably at least 99.9% by weight of at least one metal selected from the group consisting of copper, nickel, cobalt, palladium, chromium and tin.

In another most preferred embodiment, the metal plating consists of at least one metal selected from the group consisting of copper, nickel, cobalt, palladium, chromium and tin.

In another preferred embodiment, the metal plating consists of at least two metals selected from the group consisting of copper, nickel, cobalt, palladium, chromium and tin.

The metal plating can be attached to the polymer body by any methods known to the skilled person. Examples for such methods are electroless metal deposition, electrodeposition and activation methods like the classical colloidal activation or the ionogenic activation. The metal plating can also be attached to the polymer body by a combination of different of the aforementioned methods.

The thickness of the metal plating is generally in the range of about 0.1 to 250 µm, preferably of about 6 to 200 µm and more preferably of about 15 to 150 µm.

### Process for producing the article

The abovementioned embodiments and preferences with respect to the article, the polymer body, the metal and the components (A), (B), (C) and (D) apply analogously to the process for producing the article.

The process for producing the article comprises the steps of
i) providing a polymer body, wherein the polymer body comprises as components
   (A) at least one polyamide,
   (B) at least one filler,
   (C) at least one poly-N-vinyllactam polymer and
   (D) optionally at least one additive,
ii) etching at least one surface of the polymer body to be plated with at least one acid,
iii) depositing a first metal layer comprising at least one plating catalyst on the at least one etched surface of step ii),
iv) applying a second metal layer by electroless metal deposition, and
v) applying at least one further metal layer by electrodeposition.

The present invention accordingly also provides a process, comprising the steps of
i) providing a polymer body, wherein the polymer body comprises as components
   (A) at least one polyamide,
   (B) at least one filler,
   (C) at least one poly N vinyllactam polymer and
   (D) optionally at least one additive,
ii) etching at least one surface of the polymer body to be plated with at least one acid,
iii) depositing a first metal layer comprising at least one plating catalyst on the at least one etched surface of step ii),
iv) applying a second metal layer by electroless metal deposition, and
v) applying at least one further metal layer by electrodeposition.

### Step i)

In step i), a polymer body is provided, wherein the polymer body comprises the components (A), (B), (C) and optionally (D) as described above.

The polymer body provided in step i) can be present in any shape or produced by any method known to the skilled person, for example, by preparing the polymer body via injection molding and/or extrusion as described above.

### Step ii)

In step ii), at least one surface of the polymer body to be plated is etched with at least one acid. What is meant herein by "at least one acid" is precisely one acid and also mixtures of two or more acids.

Processes and acids for etching are known to those skilled in the art.

Preferably, the at least one acid in step ii) is selected from the group consisting of chromic acid, hydrochloric acid, hydrofluoric acid, phosphoric acid, sulfuric acid, trifluoroacetic acid, formic acid, acetic acid and methanesulfonic acid.

The present invention accordingly also provides a process where the at least one acid in step ii) is selected from the group consisting of chromic acid, hydrochloric acid, hydrofluoric acid, phosphoric acid, sulfuric acid, trifluoroacetic acid, formic acid, acetic acid and methanesulfonic acid.

More preferably, the at least one acid is chromic acid which may be used in conjunction with sulfuric acid or phosphoric acid.

In case the at least one acid is sulfuric acid and/or methanesulfonic acid, preferably potassium permanganate (KMnO4) and/or manganese (III) salts are added to the at least one acid.

The temperature during step ii) can generally be any temperature and is usually in the range from 20 to 110°C, preferably in the range from 30 to 80°C and particularly preferably in the range from 45 to 60°C.

Usually, the duration of step ii) may vary between wide limits and usually is in the range from 1 to 20 minutes, preferably from 3 to 15 minutes and particularly preferably from 5 to 10 minutes.

Step ii) is preferably carried out by immersing the at least one surface of the polymer body in a solution comprising the at least one acid. The immersion of the at least one surface of the polymer body is preferably carried out by goods movement or air agitation.

In case the at least one acid is chromic acid, after step ii) and prior to step iii), preferably the chromium trioxide is reduced. An example for a suitable reduction reagent is SurTec^{®} 961 R.

Optionally, the at least one etched surface of the polymer body can be cleaned after step ii) and prior to step iii). Preferably, the at least one etched surface of the polymer body is cleaned by immersing it in a rinsing bath, for example, of deionized water, alcohols or mixtures thereof.

### Step iii)

In step iii), a first metal layer comprising at least one plating catalyst is deposited on the at least one etched surface of step ii). The term "at least one plating catalyst" is understood to mean that the plating catalyst can comprise exactly one plating catalyst and also two or more different plating catalysts.

Methods for depositing a plating catalyst, which are also referred to as activation, are known to the skilled person.

Known methods for activation are, for example, the classical colloidal activation (application of metal colloids), ionogenic activation (application of palladium cations), direct metallization or processes which are known under the names Udique PlatoO, Enplate MID select or LDS Process.

Preferably, the activation is carried out by colloidal activation (application of metal colloids).

The at least one plating catalyst preferably is at least one metal selected from the group consisting of titanium, zirconium, iron, nickel, copper, chromium, ruthenium, rhodium, iridium, nickel, palladium, platinum, silver, gold, zinc, tin or lead.

More preferably, the at least one plating catalyst is selected from the group consisting of titanium, zirconium, iron, ruthenium, rhodium, iridium, palladium, platinum, silver, gold, zinc, cadmium, tin or lead.

Step iii) is preferably carried out by immersing the at least one surface of the polymer body in a water bath. Step iii) is also preferably carried out by goods movement or air agitation.

In case the activation is carried out by colloidal activation, preferably palladium colloids are used as the at least one plating catalyst. The palladium colloids are preferably protected by a tin layer on their surface. After step iii) and prior to step iv), preferably an accelerator is added for removing the tin layer from the surface of the palladium colloids.

Optionally, the activated surface of the polymer body can be cleaned after step iii) and prior to step iv). Preferably, the activated surface of the polymer body is cleaned by immersing it in a rinsing bath, for example, of deionized water, alcohols or mixtures thereof.

### Step iv)

In step iv), a second metal layer is applied by electroless metal deposition. Electroless metal deposition is a method known to the skilled person.

Electroless metal deposition is an auto-catalytic chemical technique used to deposit a metal layer on a solid substrate, such as metal or plastic. The process relies on the presence of a reducing agent which reacts with the metal ions of a metal salt to deposit the metal layer.

The second metal layer according to step iv) may be applied using an alkaline bath or an acidic bath.

In general, the second metal layer applied by electroless metal deposition in step iv) can comprise any metal. Suitable metals include, but are not limited to titanium, zirconium, iron, nickel, copper, chromium, ruthenium, rhodium, iridium, nickel, palladium, platinum, silver, gold, zinc, tin or lead.

Preferably, the second metal layer applied by electroless metal deposition comprises at least one metal selected from the group consisting of nickel and copper.

Electroless metal deposition is usually carried out in metal salt solutions that are capable of depositing a metal layer without the assistance of an external supply of electrons. Typically, such solutions comprise water, a small amount of metal ions, e.g., derived from a water-soluble metal salt, a reducing agent, and often also a complexing agent, a pH regulator and a stabilizer.

Suitable metal salts to be used for applying a metal layer by electroless metal deposition are the metal salts corresponding to the above-described metals to be deposited in step iv) and include the respective metal sulfates, metal halides, metal nitrates, and other metal salts having organic and inorganic counterions.

Rochelle salts, the sodium (mono-, di-, tri-, and tetra-sodium) salts of ethylenediaminetetraacetic acid, nitrilotriacetic acid and its alkali salts, gluconic acid, gluconates, and triethanolamine are preferred as complexing agents, but commercially available gluconolactone and modified ethylenediamineacetates are also useful.

Preferred reducing agents for use in alkaline baths include formaldehyde, and formaldehyde precursors or derivatives, such as paraformaldehyde, trioxane, dimethyl hydantoin, glyoxal, and the like. Also suitable as reducing agents in alkaline baths are borohydrides, such as alkali metal borohydrides, e.g., sodium borohydride and potassium borohydride, as well as substituted borohydrides, e.g., sodium trimethoxy borohydride. Boranes, such as aminoboranes, e.g., isopropylaminoborane, morpholinoborane, and the like are also suitable as reducing agents.

Reducing agents typically used in acid baths are, for example, hypophosphites, such as sodium and potassium hypophosphite, and the like.

The pH regulator may comprise any acid or base. For this reason, the pH adjuster on the alkaline side will ordinarily be sodium hydroxide or ammonium hydroxide. On the acid side, pH will usually be adjusted with an acid having a common anion with the metal salt.

In operation of the bath, the metal salt serves as a source of metal ions, and the reducing agent reduces the metal ions to metallic form. When reducing agents of the types described above are oxidized to provide electrons for the reduction of the metal ions, hydrogen is usually released at the site of deposition. The complexing agent serves to complex the metal ions, and at the same time makes the metal ion available as needed to the reducing action of the reducing agent. The pH adjuster serves chiefly to regulate the internal plating potential of the bath.

The metal salts are usually dissolved in an inert solvent. In general, the inert solvent used can be any solvent, provided that the solubility of the metal salt is at least 10 g/L, preferably at least 30 g/L. Suitable inert solvents are, for example, polar solvents, such as water, alcohols and mixtures thereof.

The thickness of the second metal layer usually is in the range from 0.1 to 10 µm and preferably in the range from 1 to 3 µm.

Besides metal ions, further elements of groups III and V of the periodic table, particularly B (boron) and P (phosphorus), may be present in the metal solution during the electroless metal deposition und thus be co-deposited with the metals.

The surface of the polymer body is preferably cleaned after step iv) and prior to step v). Preferably, the surface of the polymer body is cleaned after step iv) by immersing the polymer body in a rinsing bath, for example, of deionized water, alcohols or mixtures thereof.

### Step v)

In step v), at least one further metal layer is applied by electrodeposition.

Methods for applying a metal layer via electrodeposition are known to the skilled person.

The term "electrodeposition" is understood to mean a method of covering a surface of a substrate with a metallic or organometallic coating, in which the substrate is electrically biased and brought into contact with a liquid that contains precursors of the said metallic or organometallic coating, so as to form the said coating. When the substrate is an electrical conductor, the electroplating is for example carried out by passing a current between the substrate to be coated which constitutes an electrode (the cathode in the case of a metallic or organometallic coating) and a second electrode (the anode) in a bath containing a source of precursors of the coating material (for example metal ions in the case of a metallic coating) and optionally various agents intended to improve the properties of the coating formed (uniformity and fineness of the deposit, resistivity, etc.), optionally with a reference electrode being present.

In general, the at least one further metal layer applied in step v) by electrodeposition can comprise any metal. Suitable metals include, but are not limited to titanium, zirconium, iron, copper, cobalt, chromium, ruthenium, rhodium, iridium, nickel, palladium, platinum, silver, gold, zinc, tin, lead or alloys thereof.

Preferably, the at least one further metal layer applied by electrodeposition comprises at least one metal selected from the group consisting of copper, nickel and chromium.

Typically, electrodeposition is carried out in solutions comprising water, a metal salt and organic additives to achieve a homogeneous deposition.

Suitable metal salts to be used for applying a metal layer by electrodeposition are the metal salts corresponding to the above-described metals to be deposited in step v) and include the respective metal sulfates, metal sulfonates, metal halides, metal nitrates, and other metal salts having organic and inorganic counterions.

The current density during electrodeposition usually ranges from 0.01 to 20 A/dm² and preferably from 0.1 to 10 A/dm².

The voltage during electrodeposition usually ranges from 0.1 to 5 V.

The thickness of the at least one further metal layer usually is in the range from 1 to 100 µm, preferably in the range from 10 to 80 µm and more preferably in the range from 30 to 60 µm.

Optionally, the surface of the polymer body obtained in step v) can be cleaned after step v). Preferably, the surface of the polymer body obtained in step v) is cleaned by immersing the surface in a rinsing bath of deionized water.

For the sake of completeness, it is pointed out that the metal plating of the article obtained according to the inventive process comprises at least three layers, which are deposited on the polymer body in succession according to step iii), step iv) and step v) of the inventive process.

The article obtained by the aforementioned method can be used in automotive applications such as interior or exterior door handles, trunk handles, gear shifters, logos, steering wheels, wheel covers, hub caps, trim, and engine covers, tank filler caps and handle bar ends for motorcycles and scooters, and the like.

The article may be used in hardware applications such as appliance (e.g. refrigerator, oven, etc.) handles, drawer pulls and knobs, cupboard handles and knobs, shower heads, faucets and faucet handles, mirror frames, towel racks, soap dishes, toilet paper holders, toilet flush handles, switch and outlet cover plates, supports, brackets, etc.

The article may be used in household applications such as glass racks, champagne buckets, perfume bottle stoppers, wine racks, knife racks, and in electronics applications such as camera, video camera, cell phone, and computer housings.

It is readily appreciated that given the range of uses and applications listed as above, other articles beyond these and covering myriad applications are envisioned.

The present invention accordingly also provides the use of an article as door handle in automotive applications.

The present invention is illustrated below by reference to examples, without limitation thereto.

### Molding

The following starting materials were used for producing the thermoplastic molding compositions:
- Ultramid^{®} T315:: thermoplastic polyamide (6/6T) obtained from BASF SE having a viscosity number of 120 to 130 g/ml
- Ultramid^{®} T15:: thermoplastic polyamide (6/6T) obtained from BASF SE having a viscosity number of 50 to 90 g/ml
- Ultramid^{®} B27:: thermoplastic polyamide (6) obtained from BASF SE having a viscosity number of 140 to 160 g/ml

The viscosity numbers of the polyamides were determined in accordance with ISO 307 in a 0.5% strength by weight solution in 96% strength by weight sulfuric acid at 25°C.
- Translink^{®} 445:: kaolin, obtained from BASF, filler

The kaolin has an average particle diameter of 1.4 µm.
- PVP:: poly-N-vinylpyrrolidone, CAS: 9003-39-8
- PVP-VA:: poly-vinylpyrrolidone vinyl acetate copolymer, CAS: 25086-89-9
- NaH₂PO₂*H₂O:s: odium hypophosphite monohydrate, color stabilizer
- Irganox 1098 ED:: N,N'-1,6-hexanediylbis[3,5-bis(1,1-dimethylethyl)-4-hydroxy, stabilizer
- Irgafos 168 FF:: Di-tertiary butyl phenyl phosphite, stabilizer
- EBS:: ethylene bis(stearamide), lubricant

The production of the polymer body was carried out on a ZSK25 twin-screw extruder having eleven zones. The polyamides, the filler and the additives were introduced cold into zones 0 and 1. Zones 2, 3 and 4 served for melting and transport. The subsequent zones 5 and 6 served for dispersion, with part of zone 6 together with zone 7 also serving for homogenization. Redispersion was carried out in zones 8 and 9. A zone 10 for degassing and a zone 11 for discharge followed.

The extruder throughput was set to 20 kg/h and the screw speed was kept constant at 500 rpm. The extrusion temperature was 290°C in case of Ultramid^{®} T and 260 °C in case of Ultramid^{®} B. The make-up of the molding compositions is shown in table 1 below. To get the polymer body (sheet, 60 × 60 × 4 mm) the products were pelletized and processed further by injection molding. Injection molding was carried out at a melt temperature of 290°C and a mold temperature of 90°C.

The make-ups of the molding compositions and the mechanical properties of the resulting polymer bodies are shown in Table 1 below.

Examples E2, E4 and E5 are inventive examples, example C1 and C3 serve for comparison to molding compositions (polymer bodies) described in the state of the art.

**Table 1**

| Example | C1 | E2 | C3 | E4 | E5 |
|---|---|---|---|---|---|
| Ultramid^{®} B27 [% by weight] | | | 59.9 | 56.9 | 56.9 |
| Ultramid^{®} T315 [% by weight] | 49.68 | 47.68 | | | |
| Ultramid^{®} T15 [% by weight] | 10 | 10 | | | |
| Translink^{®} 445 [% by weight] | 39.6 | 39.6 | 39.6 | 39.6 | 39.6 |
| PVP [% by weight] | | 2 | | 3 | |
| PVP-VA [% by weight] | | | | | 3 |
| NaH₂PO₂*H₂O [% by weight] | 0.02 | 0.02 | | | |
| EBS [% by weight] | 0.7 | 0.7 | 0.3 | 0.3 | 0.3 |
| Irganox 1098 ED | | | 0.1 | 0.1 | 0.1 |
| Irgafos 168 FF | | | 0.1 | 0.1 | 0.1 |
| E-modulus [MPa] | 7324 | 7401 | 5733 | 5684 | 5989 |
| Tensile Strength [MPa] | 95.98 | 92.73 | 83.7 | 84.5 | 87.5 |

### Ultramid^{®} B

All polymer bodies comprising Ultramid^{®} B (C3, E4 and E5) show similar mechanical properties. They exhibit a high E-modulus (modulus of elasticity) as well as a high tensile strength, which means a high stiffness and an increased toughness. The addition of the poly-N-vinylpyrrolidone does also not lead to a decrease in stiffness or dimensional stability.

### Ultramid^{®} T

The polymer bodies comprising Ultramid^{®} T (C1 and E2) show similar mechanical properties as well. They even exhibit a higher E-modulus (modulus of elasticity) and a higher tensile strength than the polymer bodies comprising Ultramid^{®} B. The addition of the poly-N-vinylpyrrolidone does also not lead to a decrease in stiffness or dimensional stability.

### Metal Plating

The polymer bodies obtained above were metal-plated by the following steps and under the specified operating conditions (Table 2). The temporal order is from top to down. The water used for rinsing is deionized water.

**Table 2**

| Step | Bath | Temperature [°C] | Time [min] | Current density [A/dm²] |
|---|---|---|---|---|
| Etching (step ii)) | 380 g/l sulphuric acid and 380 g/I chromium trioxide | 75 | 10 | |
| Rinse | water | 50 | 5 | |
| | water | 23 | 10 s | |
| Reduction of the chromium trioxide | SurTec^{®} 961 R | 35 | 20 | |
| Rinse | water | 23 | 1 | |
| Activation (step iii)) | SurTec^{®} 961 Pd | 30 | 5 | |
| Rinse | water | 23 | 3 × 10 s | |
| Accelerator | SurTec^{®} 961 A | 50 | 5 | |
| Rinse | water | 23 | 1 | |
| Electroless metal deposition (step iv)) | HSO Electroless Nickel 601 KB | 30 | 10 | |
| Rinse | Water | 23 | 0.5 | |
| Electrodeposition of Copper (step v)) | HSO CU-HD 500 | 23 | 20 | 3.8 |
| Rinse | water | 23 | 0.5 | |
| Drying | Compressed air | | | |

### Cross cutting test

The metal-plated polymer bodies were subjected to a cross cutting test. The cross cutting test according to DIN EN ISO 2409 provides information about the metal plating adhesion and the elasticity of the surface. For this kind of test a special cutting knife is needed. 4 cut lines are drawn in a right angle through the metal plating on a welldefined area (10 mm × 10 mm) until the underground is reached. The blade distance depends on the metal plating thickness. Afterwards, an adhesive tape (defined in the norm) is stuck on the cut grid and removed in a vertical way.

The emerged cut grid is evaluated by using the standard pictures and comparing them to the actual result; the different extents of damage can be assessed. The test results (cross cut rating) can be evaluated between 0 (very good) and 5 (very bad).

The metal-plated polymer body according to the invention E2 can be classified into class 0. The edges of the cuts are completely smooth; none of the squares of the lattice are detached. E4 and E5 can be classified into class 1. None of the squares are detached and the edges are almost completely smooth.

The comparative metal-plated polymer body (C1) can be classified into class 4. The coating has flaked along the edges of the cuts in large ribbons, and/or some squares have detached partly or wholly. A cross-cut area significantly greater than 35%, but not significantly greater than 65%, is affected. The comparative metal-plated polymer body (C3) can be classified into class 5. A large ribbon is detached from the polymer body and continues to peel off outside the test area.

## Claims

1. Article comprising a polymer body and a metal plating, wherein the metal plating is attached to the polymer body, and wherein the polymer body comprises as components
(A) at least one polyamide,
(B) at least one filler,
(C) at least one poly-N-vinyllactam polymer, and
(D) optionally at least one additive, wherein the article is produced by a process comprising the steps of
i) providing a polymer body, wherein the polymer body comprises the components (A) to (D)
ii) etching at least one surface of the polymer body to be plated with at least one acid,
iii) depositing a first metal layer comprising at least one plating catalyst on the at least one etched surface of step ii),
iv) applying a second metal layer by electroless metal deposition, and
v) applying at least one further metal layer by electrodeposition.

2. Article according to claim 1, wherein the at least one poly-N-vinyllactam polymer (C) comprises polymerized units of the formula (I) 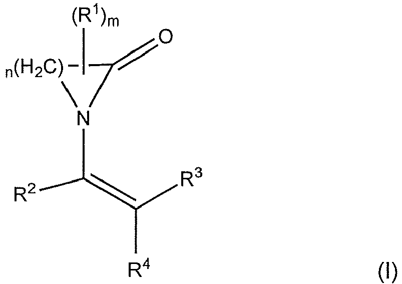 where
n is 3 to 12;
m is 0 to 3;
R¹ is C₁-C₁₀-alkyl, C₂-C₁₀-alkenyl, aryl or aralkyl;
R², R³ and R⁴ are each, independently of one another, hydrogen, C₁-C₁₀-alkyl, C₂-C₁₀-alkenyl, aryl or aralkyl.

3. Article according to claim 1 or 2, wherein the at least one poly-N-vinyllactam polymer (C) comprises polymerized units of N-vinyllactams selected from the group consisting of N-vinylpyrrolidone (N-vinyl-2-pyrrolidone), N-vinylpiperidone (N-vinyl-2-piperidone) and N-vinylcaprolactam.

4. Article according to any one of claims 1 to 3, wherein the at least one poly-N-vinyllactam polymer (C) comprises copolymerized units of N-vinyllactams selected from the group consisting of N-vinylpyrrolidone, N-vinylpiperidone and N-vinylcaprolactam with 1-vinylimidazole or vinyl acetate.

5. Article according to any one of claims 1 to 4, wherein the at least one poly-N-vinyllactam polymer (C) has a weight average molecular weight M_{w} of 2,500 to 250,000 g/mol.

6. Article according to any one of claims 1 to 5, wherein the polymer body comprises
from 35 to 85 % by weight of the at least one polyamide (A),
from 14.9 to 55 % by weight of the at least one filler (B),
from 0.1 to 10 % by weight of the at least one poly-N-vinyllactam polymer (C) and,
from 0 to 8 % by weight of the at least one additive (D),
based on the total weight of the polymer body.

7. Article according to any one of claims 1 to 6, wherein the at least one polyamide (A) is selected from the group consisting of polyamide 4, polyamide 6, polyamide 7, polyamide 8, polyamide 9, polyamide 11, polyamide 12, polyamide 46, polyamide 66, polyamide 69, polyamide 610, polyamide 612, polyamide 613, polyamide 1212, polyamide 1313, polyamide 6T, polyamide 9T, polyamide MXD6, polyamide 6I, polyamide 6-3-T, polyamide 6/6T, polyamide 6/66, polyamide 6/12, polyamide 66/6/610, polyamide 6I/6T, polyamide PACM 12, polyamide 61/6T/PACM, polyamide 12/MACMI, polyamide 12/MACMT and polyamide PDA-T.

8. Article according to any one of claims 1 to 7, wherein the at least one filler (B) is selected from the group consisting of alkaline earth metal carbonate, alkaline earth metal oxide, alkaline earth metal silicate, metallic fibre, asbestos, ceramic fibre, glass fibre, carbon fibre, aramid fibre, titanium dioxide, aluminum oxide, mica, talc, barium sulfate, plaster, zirconium oxide, antimony oxide, clay, silica, silica-alumina, alumina, sericite, kaolin, diatomite, magnesium carbonate, feldspar, silica stone, carbon black, glass bead, Shirasu balloon, red oxide, zinc oxide, wollastonite and Syloid.

9. Article according to any one of claims 1 to 8, wherein the at least one filler (B) is in particulate form and has an average particle size of 0.1 to 50 µm.

10. Article according to any one of claims 1 to 9, wherein the metal plating comprises at least one metal selected from the group consisting of copper, nickel, cobalt, palladium, chromium and tin.

11. Article according to any one of claims 1 to 10, wherein the at least one additive is selected from the group consisting of lubricants, antioxidants, colorants, color stabilizers, antistatic agents, flame retardants, agents for increasing resistance to ultraviolet light, stabilizers for improving heat resistance, mold release agents, nucleating agents and plasticizers.

12. A process for producing the article according to any one of claims 1 to 11, comprising the steps of
i) providing a polymer body, wherein the polymer body comprises as components
(A) at least one polyamide,
(B) at least one filler,
(C) at least one poly-N-vinyllactam polymer and
(D) optionally at least one additive,
ii) etching at least one surface of the polymer body to be plated with at least one acid,
iii) depositing a first metal layer comprising at least one plating catalyst on the at least one etched surface of step ii),
iv) applying a second metal layer by electroless metal deposition, and
v) applying at least one further metal layer by electrodeposition.

13. A process according to claim 12, wherein the at least one acid in step ii) is selected from the group consisting of chromic acid, hydrochloric acid, hydrofluoric acid, phosphoric acid, sulfuric acid, trifluoroacetic acid, formic acid, acetic acid and methanesulfonic acid.

14. The use of an article obtained according to the process of claims 12 or 13 as door handle in automotive applications.

15. The use of a polymer body comprising as components
(A) at least one polyamide,
(B) at least one filler,
(C) at least one poly-N-vinyllactam polymer and
(D) optionally at least one additive
for producing metal plated articles according to any one of claims 1 to 11 .

## Patentansprüche

1. Artikel, umfassend einen Polymerkörper und eine Metallplattierung, wobei die Metallplattierung an dem Polymerkörper angebracht ist und wobei der Polymerkörper als Komponenten Folgendes umfasst:
(A) mindestens ein Polyamid,
(B) mindestens einen Füllstoff,
(C) mindestens ein Poly-N-vinyllactam-Polymer und
(D) gegebenenfalls mindestens ein Additiv,
wobei der Artikel durch ein Verfahren hergestellt wird, das folgende Schritte umfasst:
i) Bereitstellen eines Polymerkörpers, wobei der Polymerkörper die Komponenten (A) bis (D) umfasst,
ii) Ätzen mindestens einer Oberfläche des zu plattierenden Polymerkörpers mit mindestens einer Säure,
iii) Abscheiden einer ersten Metallschicht, die mindestens einen Plattierungskatalysator umfasst, auf der mindestens einen geätzten Oberfläche aus Schritt ii),
iv) Aufbringen einer zweiten Metallschicht durch stromlose Metallabscheidung und
v) Aufbringen mindestens einer weiteren Metallschicht durch galvanische Abscheidung.

2. Artikel nach Anspruch 1, wobei das mindestens eine Poly-N-vinyllactam-Polymer (C) polymerisierte Einheiten der Formel (I) 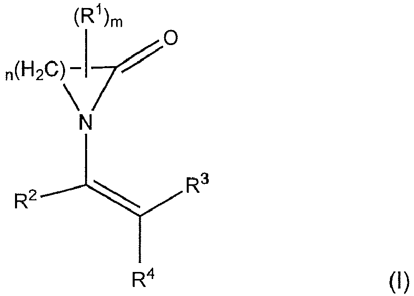 umfasst, wobei
n für 3 bis 12 steht;
m für 0 bis 3 steht;
R¹ für C₁-C₁₀-Alkyl, C₂-C₁₀-Alkenyl, Aryl oder Aralkyl steht;
R², R³ und R⁴ jeweils unabhängig voneinander für Wasserstoff, C₁-C₁₀-Alkyl, C₂-C₁₀-Alkenyl, Aryl oder Aralkyl stehen.

3. Artikel nach Anspruch 1 oder 2, wobei das mindestens eine Poly-N-vinyllactam-Polymer (C) polymerisierte Einheiten von N-Vinyllactamen aus der Gruppe bestehend aus N-Vinylpyrrolidon (N-Vinyl-2-pyrrolidon), N-Vinylpiperidon (N-Vinyl-2-piperidon) und N-Vinylcaprolactam umfasst.

4. Artikel nach einem der Ansprüche 1 bis 3, wobei das mindestens eine Poly-N-vinyllactam-Polymer (C) copolymerisierte Einheiten von N-Vinyllactamen aus der Gruppe bestehend aus N-Vinylpyrrolidon, N-Vinylpiperidon und N-Vinylcaprolactam mit 1-Vinylimidazol oder Vinylacetat umfasst.

5. Artikel nach einem der Ansprüche 1 bis 4, wobei das mindestens eine Poly-N-vinyllactam-Polymer (C) ein gewichtsmittleres Molekulargewicht M_{w} von 2500 bis 250.000 g/mol aufweist.

6. Artikel nach einem der Ansprüche 1 bis 5, wobei der Polymerkörper Folgendes umfasst:
35 bis 85 Gew.-% mindestens eines Polyamids (A), 14,9 bis 55 Gew.-% mindestens eines Füllstoffs (B), 0,1 bis 10 Gew.-% mindestens eines Poly-N-vinyllactam-Polymers (C) und
0 bis 8 Gew.-% mindestens eines Additivs (D), bezogen auf das Gesamtgewicht des Polymerkörpers.

7. Artikel nach einem der Ansprüche 1 bis 6, wobei das mindestens eine Polyamid (A) aus der Gruppe bestehend aus Polyamid 4, Polyamid 6, Polyamid 7, Polyamid 8, Polyamid 9, Polyamid 11, Polyamid 12, Polyamid 46, Polyamid 66, Polyamid 69, Polyamid 610, Polyamid 612, Polyamid 613, Polyamid 1212, Polyamid 1313, Polyamid 6T, Polyamid 9T, Polyamid MXD6, Polyamid 61, Polyamid 6-3-T, Polyamid 6/6T, Polyamid 6/66, Polyamid 6/12, Polyamid 66/6/610, Polyamid 61/6T, Polyamid PACM 12, Polyamid 6I/6T/PACM, Polyamid 12/MACMI, Polyamid 12/MACMT und Polyamid PDA-T ausgewählt ist.

8. Artikel nach einem der Ansprüche 1 bis 7, wobei der mindestens eine Füllstoff (B) aus der Gruppe bestehend aus Erdalkalimetallcarbonat, Erdalkalimetalloxid, Erdlkalimetallsilikat, Metallfaser, Asbest, Keramikfaser, Glasfaser, Kohlefaser, Aramidfaser, Titandioxid, Aluminiumoxid, Glimmer, Talk, Bariumsulfat, Putz, Zirconiumoxid, Antimonoxid, Ton, Siliciumdioxid, Siliciumdioxid-Aluminiumoxid, Aluminiumoxid, Sericit, Kaolin, Diatomit, Magnesiumcarbonat, Feldspat, Silikastein, Ruß, Glasperle, Shirasu-Ballon, Rotoxid, Zinkoxid, Wollastonit und Syloid ausgewählt ist.

9. Artikel nach einem der Ansprüche 1 bis 8, wobei der mindestens eine Füllstoff (B) in Teilchenform vorliegt und eine durchschnittliche Teilchengröße von 0,1 bis 50 µm aufweist.

10. Artikel nach einem der Ansprüche 1 bis 9, wobei die Metallplattierung mindestens ein Metall aus der Gruppe bestehend aus Kupfer, Nickel, Kobalt, Palladium, Chrom und Zinn umfasst.

11. Artikel nach einem der Ansprüche 1 bis 10, wobei das mindestens ein Additiv aus der Gruppe bestehend aus Schmiermitteln, Antioxidantien, Farbmitteln, Farbstabilisatoren, Antistatika, Flammschutzmitteln, Mitteln zur Erhöhung der Beständigkeit gegenüber ultraviolettem Licht, Stabilisatoren zur Verbesserung der Wärmebeständigkeit, Formtrennmitteln, Nukleierungsmitteln und Weichmachern ausgewählt ist.

12. Verfahren zur Herstellung des Artikels nach einem der Ansprüche 1 bis 11, das folgende Schritte umfasst:
i) Bereitstellen eines Polymerkörpers, wobei der Polymerkörper als Komponenten Folgendes umfasst:
(A) mindestens ein Polyamid,
(B) mindestens einen Füllstoff,
(C) mindestens ein Poly-N-vinyllactam-Polymer und
(D) gegebenenfalls mindestens ein Additiv,
ii) Ätzen mindestens einer Oberfläche des zu plattierenden Polymerkörpers mit mindestens einer Säure,
iii) Abscheiden einer ersten Metallschicht, die mindestens einen Plattierungskatalysator umfasst, auf der mindestens einen geätzten Oberfläche aus Schritt ii),
iv) Aufbringen einer zweiten Metallschicht durch stromlose Metallabscheidung und
v) Aufbringen mindestens einer weiteren Metallschicht durch galvanische Abscheidung.

13. Verfahren nach Anspruch 12, wobei die mindestens eine Säure in Schritt ii) aus der Gruppe bestehend aus Chromsäure, Chlorwasserstoffsäure, Fluorwasserstoffsäure, Phosphorsäure, Schwefelsäure, Trifluoressigsäure, Ameisensäure, Essigsäure und Methansulfonsäure ausgewählt wird.

14. Verwendung eines gemäß dem Verfahren nach Anspruch 12 oder 13 erhaltenen Artikels als Türgriff bei Automobilanwendungen.

15. Verwendung eines Polymerkörpers, der als Komponenten Folgendes umfasst:
(A) mindestens ein Polyamid,
(B) mindestens einen Füllstoff,
(C) mindestens ein Poly-N-vinyllactam-Polymer und
(D) gegebenenfalls mindestens ein Additiv,
zur Herstellung von metallplattierten Artikeln nach einem der Ansprüche 1 bis 11.

## Revendications

1. Article comprenant un corps de polymère et un placage métallique, dans lequel le placage métallique est fixé au corps de polymère, et dans lequel le corps de polymère comprend en tant que composants
(A) au moins un polyamide,
(B) au moins une charge,
(C) au moins un polymère de poly-N-vinyllactame, et
(D) facultativement au moins un additif, l'article étant produit par un procédé comprenant les étapes de
i) fourniture d'un corps de polymère, dans lequel le corps de polymère comprend les composants (A) à (D)
ii) gravure d'au moins une surface du corps de polymère devant être plaqué avec au moins un acide,
iii) dépôt d'une première couche métallique comprenant au moins un catalyseur de placage sur l'au moins une surface gravée de l'étape ii),
iv) application d'une deuxième couche métallique par dépôt autocatalytique de métal, et
v) application d'au moins une couche métallique supplémentaire par électrodéposition.

2. Article selon la revendication 1, dans lequel l'au moins un polymère de poly-N-vinyllactame (C) comprend des motifs polymérisés de formule (I) 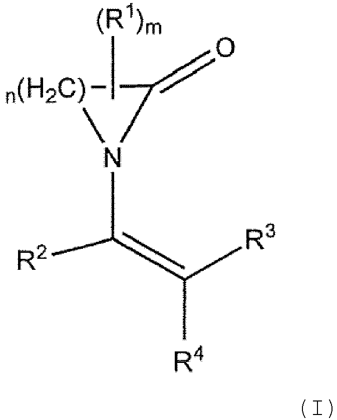 où
n est 3 à 12 ;
m est 0 à 3 ;
R¹ est alkyle en C₁-C₁₀, alcényle en C₂-C₁₀, aryle ou aralkyle ;
R², R³ et R⁴ sont chacun, indépendamment l'un de l'autre, hydrogène, alkyle en C₁-C₁₀, alcényle en C₂-C₁₀, aryle ou aralkyle.

3. Article selon la revendication 1 ou 2, dans lequel l'au moins un polymère de poly-N-vinyllactame (C) comprend des motifs polymérisés de N-vinyllactames choisis dans le groupe constitué de N-vinylpyrrolidone (N-vinyl-2-pyrrolidone), N-vinylpipéridone (N-vinyl-2-pipéridone) et N-vinylcaprolactame.

4. Article selon l'une quelconque des revendications 1 à 3, dans lequel l'au moins un polymère de poly-N-vinyllactame (C) comprend des motifs copolymérisés de N-vinyllactames choisis dans le groupe constitué de N-vinylpyrrolidone, N-vinylpipéridone et N-vinylcaprolactame avec 1-vinylimidazole ou acétate de vinyle.

5. Article selon l'une quelconque des revendications 1 à 4, dans lequel l'au moins un polymère de poly-N-vinyllactame (C) a un poids moléculaire moyen en poids M_{w} de 2 500 à 250 000 g/mol.

6. Article selon l'une quelconque des revendications 1 à 5, dans lequel le corps de polymère comprend
de 35 à 85 % en poids de l'au moins un polyamide (A),
de 14,9 à 55 % en poids de l'au moins une charge (B),
de 0,1 à 10 % en poids de l'au moins un polymère de poly-N-vinyllactame (C) et,
de 0 à 8 % en poids de l'au moins un additif (D),
sur la base du poids total du corps de polymère.

7. Article selon l'une quelconque des revendications 1 à 6, dans lequel l'au moins un polyamide (A) est choisi dans le groupe constitué de polyamide 4, polyamide 6, polyamide 7, polyamide 8, polyamide 9, polyamide 11, polyamide 12, polyamide 46, polyamide 66, polyamide 69, polyamide 610, polyamide 612, polyamide 613, polyamide 1212, polyamide 1313, polyamide 6T, polyamide 9T, polyamide MXD6, polyamide 61, polyamide 6-3-T, polyamide 6/6T, polyamide 6/66, polyamide 6/12, polyamide 66/6/610, polyamide 61/6T, polyamide PACM 12, polyamide 61/6T/PACM, polyamide 12/MACMI, polyamide 12/MACMT et polyamide PDA-T.

8. Article selon l'une quelconque des revendications 1 à 7, dans lequel l' au moins une charge (B) est choisie dans le groupe constitué de caebonate de métal alcalino-terreux, oxyde de métal alcalino-terreux, silicate de métal alcalino-terreux, fibre métallique, amiante, fibre céramique, fibre de verre, fibre de carbone, fibre d'aramide, dioxyde de titane, oxyde d'aluminium, mica, talc, sulfate de baryum, plâtre, oxyde de zirconium, oxyde d'antimoine, argile, silice, silice-alumine, alumine, séricite, kaolin, diatomite, carbonate de magnésium, feldspath, roche de silice, noir de carbone, bille de verre, Shirasu-Balloon, oxyde rouge, oxyde de zinc, wollastonite et Syloid.

9. Article selon l'une quelconque des revendications 1 à 8, dans lequel l'au moins une charge (B) est sous forme particulaire et a une taille de particule moyenne de 0,1 à 50 µm.

10. Article selon l'une quelconque des revendications 1 à 9, dans lequel le placage métallique comprend au moins un métal choisi dans le groupe constitué du cuivre, du nickel, du cobalt, du palladium, du chrome et de l'étain.

11. Article selon l'une quelconque des revendications 1 à 10, dans lequel l'au moins un additif est choisi dans le groupe constitué de lubrifiants, antioxydants, colorants, stabilisants de couleur, agents antistatiques, agents ignifuges, agents pour augmenter la résistance à la lumière ultraviolette, stabilisants pour améliorer la résistance à la chaleur, agents de démoulage, agents de nucléation et plastifiants.

12. Procédé de production de l'article selon l'une quelconque des revendications 1 à 11, comprenant les étapes de
i) fourniture d'un corps de polymère, dans lequel le corps de polymère comprend en tant que composants
(A) au moins un polyamide,
(B) au moins une charge,
(C) au moins un polymère de poly-N-vinyllactame et
(D) facultativement au moins un additif,
ii) la gravure d'au moins une surface du corps de polymère devant être plaqué avec au moins un acide,
iii) le dépôt d'une première couche métallique comprenant au moins un catalyseur de placage sur l'au moins une surface gravée de l'étape ii),
iv) l'application d'une deuxième couche métallique par dépôt autocatalytique de métal, et
v) application d'au moins une couche métallique supplémentaire par électrodéposition.

13. Procédé selon la revendication 12, dans lequel l'au moins un acide dans l'étape ii) est choisi dans le groupe constitué de l'acide chromique, l'acide chlorhydrique, l'acide fluorhydrique, l'acide phosphorique, l'acide sulfurique, l'acide trifluoroacétique, l'acide formique, l'acide acétique et l'acide méthanesulfonique.

14. Utilisation d'un article obtenu selon le procédé des revendications 12 ou 13 en tant que poignée de porte dans des applications automobiles.

15. Utilisation d'un corps de polymère comprenant en tant que composants
(A) au moins un polyamide,
(B) au moins une charge,
(C) au moins un polymère de poly-N-vinyllactame et
(D) facultativement au moins un additif pour produire des articles plaques de métal selon l'une quelconque des revendications 1 à 11.
